# EUROPÄISCHE PATENTSCHRIFT

(11) **EP 1 457 439 B1**
(45) Veröffentlichungstag und Bekanntmachung des Hinweises auf die Patenterteilung: **09.11.2005**
(21) Anmeldenummer: 03010949.0
(22) Anmeldetag: 16.05.2003
(51) Int. Cl.: B65G 19/26, B65G 47/88

(54) **Stauklinkenförderer mit Vereinzelungseinrichtung**
Pawl conveyor cooperating with a separating device
Transporteur à cliquets coopérant avec un dispositif de séparation

(30) Priorität: 12.03.2003 DE 20304024 U
(43) Veröffentlichungstag der Anmeldung: 15.09.2004
(73) Patentinhaber: Schneuing, Petra, 33803 Steinhagen (DE)
(72) Erfinder: Schneuing, Ralf, 33803 Steinhagen (DE)
(74) Vertreter: Dantz, Jan Henning

(56) Entgegenhaltungen:
- DE-U- 20 110 857
- US-A- 4 927 054
- US-A- 5 305 896

## Beschreibung

Die Erfindung betrifft einen Stauklinkenförderer für Kleiderbügel unterschiedlicher Stärke, z.B. Draht- und Kunststoffkleiderbügel, die mit Hilfe von Transportklinken, die an einer Kette befestigt sind, über eine Transportschiene bewegt werden, mit einer Einrichtung zur Vereinzelung der Kleiderbügel für einen vereinzelten Weitertransport auf der Transportschiene mit Hilfe der Transportklinken.

Stauklinkenförderer dieser Art sind in verschiedenen Ausführungsformen bekannt. Sie werden beispielsweise bei der Produktion, der Lagerung und der Sortierung von Kleidungsstücken eingesetzt, die sich auf Kleiderbügeln befinden und mit Hilfe dieser Kleiderbügel transportiert werden. Die vorliegende Erfindung bezieht sich auf eine Ausführungsform, bei der die Kleiderbügel nicht, wie früher weitgehend üblich, auf Trolleys gehängt und mit deren Hilfe transportiert werden, sondern bei denen die Kleiderbügel direkt mit Hilfe von geschleppten Klinken über die Transportschienen gezogen werden.

Bei Förderern dieser Art sind Vereinzelungseinrichtungen bekannt, in denen die Kleiderbügel von den Haken der Stauklinken freigegeben werden und sich über eine Gefällestrecke allein unter Einwirkung der Schwerkraft abwärts bewegen. Bei einer bekannten Bauform laufen die Kleiderbügel in der Gefällestrecke gegen einen Anschlag, und sodann wird eine Nadel zwischen den ersten und zweiten Kleiderbügel abgesenkt. Wenn anschließend der Anschlag abgesenkt wird, kann sich der erste Kleiderbügel über die Gefällestrecke weiter abwärts bewegen, während der zweite und die nachfolgenden Kleiderbügel durch die Nadel festgehalten werden, bis sich der Anschlag wieder in seiner angehobenen Position befindet.

Vereinzelungseinrichtungen dieser Art eignen sich zum einen nicht für die Vereinzelung von Kleiderbügeln unterschiedlicher Stärke der Kleiderbügelhaken, also etwa Kleiderbügel mit Drahthaken und mit Kunststoffhaken.

Vereinzelungseinrichtungen, bei denen der Transport der Kleiderbügel durch Schwerkraft in einer Gefällestrecke erfolgt, haben im übrigen einige weitere grundsätzliche Nachteile.

Da das Gefälle der Gefällestrecke so stark sein muß, dass auch Kleiderbügel mit schlechten Gleiteigenschaften zuverlässig transportiert werden können, erreichen die Kleiderbügel insgesamt eine relativ hohe Geschwindigkeit. Dies führt zu Pendelbewegungen beim Auftreffen auf den Anschlag, durch die die Kleidungsstücke von den Bügeln gelöst werden können und herabfallen. Im übrigen können Code-Karten mit einem maschinenlesbaren Code, die bei vielen Anwendungsfällen über die Bügel gehängt werden und während des Transports maschinell abgelesen werden können, durch den entstehenden Luftzug beim Herabrutschen auf der Gefällestrecke nach hinten umklappen oder anderweitig ihre vorgesehene Position an der Vorderseite der Kleidungsstücke verlassen, so dass sie von den Ableseeinrichtungen, die auf eine bestimmte vorgegebene Position der Code-Karten eingerichtet sind, nicht mehr abgelesen werden können. Im übrigen besteht auch die Gefahr, dass Kleiderbügel beim Auftreffen auf den Anschlag übereinander gleiten und sich miteinander verhaken.

Die zuletzt genannten Nachteile gelten auch für Vereinzelungseinrichtungen mit einer Gefällestrecke für den Transport der Kleidungsstücke, bei denen die Kleiderbügel durch eine Hubeinrichtung einzeln über einen Anschlag hinweggehoben werden.

Aus der DE 201 10 857 ist ein Schleppklinkenförderer bekannt, bei dem einzelne Schleppklinken entlang einer vorgegebenen Bahn beweglich angetrieben sind. Jede Schleppklinke weist einen Haken auf, mittels dem ein Kleiderbügel gegriffen und entlang einer Schiene bewegbar ist.

Aus der US 4 927 054 ist ein Vereinzelungssystem für die Förderung von Kleiderhaken bekannt, bei dem die Kleiderhaken zunächst an einer Sammelstelle gehalten werden, um dann von einem Heber entlang einer Führungsbahn verschoben zu werden. Der Heber greift dabei lediglich einen Kleiderbügel, sodass eine entsprechende Vereinzelung stattfindet, wobei der Transport der Kleiderhaken nur auf der Schwerkraft basiert. Zudem weist die Vereinzelungseinrichtung oberhalb der Kleiderbügel eine gekrümmte Führungsbahn auf, die den vereinzelten Kleiderbügel senkrecht zu dem Heber führt.

Der Erfindung liegt die Aufgabe zugrunde, einen Stauklinkenförderer der eingangs genannten Art zu schaffen, der es gestattet, Kleiderbügel unmittelbar auf der Transportschiene ohne Zwischenschaltung einer Gefällestrecke zu vereinzeln. Insbesondere soll es möglich sein, auch Kleiderbügel unterschiedlicher Art und unterschiedlicher Hakenstärke zu handhaben.

Diese Aufgabe wird mit einem Stauklinkenförderer mit den Merkmalen des Anspruchs 1 gelöst.

Auf diese Weise wird erreicht, dass die Kleidungsstücke innerhalb des durchgehenden Schienensystems vereinzelt werden können. Sie werden dabei ausschließlich durch die Stauklinken transportiert, die die Haken der Kleiderbügel zunächst in die Sammelstelle befördern und auf der Ausgangsseite der Sammelstelle wiederum von dem Heber abgreifen und weitertransportieren. Die Transportgeschwindigkeit wird dabei allein von der Geschwindigkeit der Stauklinken bestimmt. Eine übermäßige Beschleunigung, wie sie bei den bekannten Vereinzelungseinrichtungen auf einer Gefällestrecke eintreten kann, findet nicht statt.

Die Sammelstelle kann vorzugsweise durch eine leichte Vertiefung in der Transportschiene gebildet werden, in die die Haken der Kleiderbügel hineingleiten. Durch die dadurch eintretende Absenkung der Bügelhaken kommen diese von den Transportklinken frei.

Die Bodenfläche der Vertiefung ist so geformt, dass die Kleiderbügel, deren Haken sich in der Vertiefung befinden, gegen den Anschlag rutschen. Der Boden kann daher beispielsweise schräg zum Anschlag hin abfallen.

Vorzugsweise ist die Oberfläche des Hebers in Transportrichtung geneigt oder ausgekehlt, so dass die Kleiderbügelhaken während des Hubes nicht von der Oberfläche des Hebers abrutschen. Auch Kleiderbügel, deren Haken, bezogen auf die Transportrichtung, breiter sind als die Oberfläche des Hebers, können auf diese Weise festgehalten und angehoben werden. Zu diesem Zweck kann das hintere Ende der oberen Oberfläche des Hebers zu einer Spitze zusammengezogen werden, auf der sich Kunststoffbügel abstützen können, ohne zu verrutschen. Vorzugsweise befindet sich vor der Vereinzelungseinrichtung ein anhebbarer Anschlag, der es gestattet, den Einlauf der Bügel in die Vertiefung der Vereinzelungseinrichtung zu begrenzen. Der Anschlag weist eine obere Oberfläche auf, die eine Führungsfläche für die Stauklinken bildet und diese so anhebt, dass sie die mitgebrachten Kleiderbügel vor dem Anschlag freigeben.

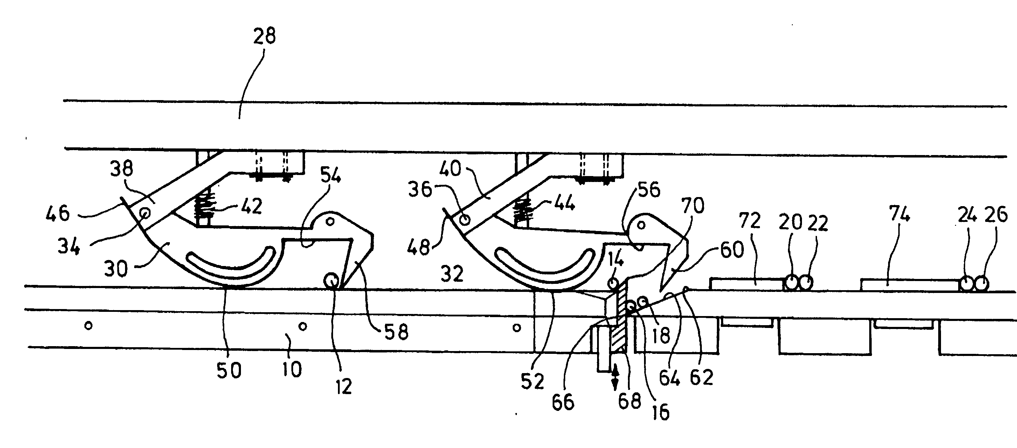

Im folgenden werden bevorzugte Ausführungsbeispiele der Erfindung anhand der beigefügten Zeichnung näher erläutert.

Die einzige Figur ist eine schematische Seitenansicht eines Ausschnitts aus einem erfindungsgemäßen Stauklinkenförderer.

In der Zeichnung ist mit 10 eine Transportschiene bezeichnet. Auf dieser Transportschiene befinden sich Kleiderbügelhaken 12,14,16,18,20,22,24,26, die entsprechend dem üblichen Querschnitt von Kleiderbügelhaken aus Metall als Kreise dargestellt sind. Oberhalb der Transportschiene 10 und in Abstand zu dieser befindet sich eine Kettenführung 28, in der eine nicht dargestellte endlose Kette bewegt wird. An dieser Kette sind in Abständen Stauklinken 30, 32 befestigt. Die Stauklinken 30,32 sind mit Hilfe von waagerechten, senkrecht zur Zeichenebene gerichteten Schwenkachsen 34,36 an Tragarmen 38,40 gelagert. Diese Tragarme 38,40 sind in nicht gezeigter Weise mit der nicht dargestellten Kette verbunden. Die Kette wird von rechts nach links in der Zeichnung angetrieben.

Zwischen den Tragarmen 38,40 und den Stauklinken 30,32 befinden sich Druckfedern 42,44, in der Zeichnung beispielhaft als Schraubenfedern dargestellt. Die Schraubenfedern sitzen auf nicht bezeichneten Zapfen, die sich auf den einander zugewandten Flächen der Tragarme 38,40 und der Stauklinken 30,32 befinden. Im übrigen befinden sich an den Stauklinken 30,32 Anschlagplatten 46,48, die in der dargestellten Stellung gegen die untere Stirnfläche der Tragarme 38,40 anschlagen und bewirken, dass die Stauklinken 30,32 nicht weiter nach unten geschwenkt werden können.

Die Stauklinken 30,32 besitzen an ihrer Unterseite eine ausgewölbte Nockenfläche 50, 52 und in Transportrichtung hinter dieser eine von der Unterseite her fene Tasche 54,56. Hinter dieser Tasche 54,56 sind nach unten gerichtete Haken 58,60 vorgesehen, mit denen Kleiderbügel, die sich auf der Transportschiene 10 befinden, gezogen werden können.

In der Transportschiene 10 befindet sich eine Vertiefung 62. Die Vertiefung 62 weist eine schräg abfallende Bodenfläche 64 auf, die vor einer senkrechten Anschlagfläche 66 endet. Vor der Anschlagfläche 66 ist ein Heber 68 in senkrechter Richtung aufwärts und abwärts beweglich.

Der Heber 68 weist eine obere Oberfläche 70, die in Transportrichtung, d.h. nach links in der Zeichnung abgeschrägt oder ausgekehlt ist, auf.

Bei der Vertikalbewegung des Hebers 68 bewegt sich dessen obere Oberfläche zwischen einer Position, in der sie die Bodenfläche 64 der Vertiefung 62 verlängert, und einer Position in Höhe der oberen Führungsflächen der Transportschienen 10. In dieser oberen Stellung werden die Kleiderbügel 14 durch die Haken 58,60 der Stauklinken 30,32 mitgenommen.

Stromaufwärts der Vertiefung 62 befinden sich zwei Anschläge 72,74, die aus der gezeigten angehobenen Position abgesenkt werden können. In der angehobenen Position dienen die Anschläge 72,74 zum Zurückhalten von Kleiderbügeln 20,22 und 24,26. Die obere Oberfläche der Anschläge 72,74 ist so groß, dass sie im Zusammenwirken mit der Nockenfläche 50,52 der Stauklinken 30,32 die Stauklinken so weit anhebt, dass die Haken der Stauklinken von den Kleiderbügeln frei kommen und die Kleiderbügel vor den Anschlägen 72,74 stehenbleiben, wie es in der Zeichnung gezeigt ist.

Der Begriff der Vertiefung ist im vorliegenden Zusammenhang nicht nur räumlich zu verstehen. In Betracht kommt auch eine Sammelstelle, in die die Bügel nicht durch Schwerkraft-Einfluss hinabgleiten, sondern zu der die Bügel durch nachgiebige Fördermittel geschoben werden. In Betracht kommt etwa ein Bürstenantrieb oder auch ein schlupfbehaftetes Förderband.

## Patentansprüche

1. Stauklinkenförderer für Kleiderbügel unterschiedlicher Stärke, z.B. Draht- und Kunststoffkleiderbügel, die mit Hilfe von Transportklinken (30,32,58,60), die an einer Kette befestigt sind, über eine Transportschiene (10) bewegt werden, mit einer Einrichtung zur Vereinzelung der Kleiderbügel für einen vereinzelten Weitertransport auf der Transportschiene mit Hilfe der Transportklinken, **dadurch gekennzeichnet, dass** die Vereinzelungseinrichtung eine Sammelstelle (62) auf der Transportschiene (10) umfasst, in der sich eine Anschlagfläche (66) befindet, und dass vor der Anschlagfläche (66) ein aufwärts und abwärts verschiebbarer Heber (68) vorgesehen ist, dessen obere Oberfläche (70) bei dieser Vertikalverschiebung zwischen einer Position am Boden der Sammelstelle (62) und einer Position oberhalb der Anschlagfläche beweglich ist, wobei der Heber (68) zweiteilig ausgebildet ist und zwei nebeneinander liegende Teile aufweist, zwischen denen die Stauklinken hindurch laufen.

2. Stauklinkenförderer nach Anspruch 1, **dadurch gekennzeichnet, dass** die Sammelstelle (62) durch eine Vertiefung in der Transportschiene (10) gebildet ist.

3. Stauklinkenförderer nach Anspruch 2, **dadurch gekennzeichnet, dass** die Bodenfläche (64) der Vertiefung (62) in Transportrichtung schräg abfällt.

4. Stauklinkenförderer nach einem der vorherigen Ansprüche, **dadurch gekennzeichnet, dass** die obere Oberfläche (70) des Hebers (68) in Transportrichtung abgeschrägt oder ausgekehlt ist.

5. Stauklinkenförderer nach einem der vorherigen Ansprüche, **dadurch gekennzeichnet, dass** vor der Vereinzelungseinrichtung wenigstens ein Anschlag (72,74) zum Zurückhalten von Kleiderbügeln vorgesehen ist.

6. Stauklinkenförderer nach einem der Ansprüche 1 bis 5, **dadurch gekennzeichnet, dass** in der Sammelstelle ein Bürstenantrieb, ein schlupfbehaftetes Förderband oder dergleichen vorgesehen ist, durch die die Bügel gegen die Anschlagfläche bewegt werden.

## Claims

1. Pawl conveyor for clothes hangers of different thickness, for example wire and plastic clothes hangers, which are moved over a transport rail (10) with the aid of transport pawls (30, 32, 58, 60) which are fastened to a chain, having a device for separating the clothes hangers for separated onward transport on the transport rail with the aid of the transport pawls, **characterized in that** the separating device comprises a collecting point (62) on the transport rail (10), in which there is a stop surface (66), and **in that**, before the stop surface (66), there is a lifter (68) which can be displaced upwards and downwards and whose upper surface (70) can be moved between a position on the bottom of the collecting point (62) and a position above the stop surface during this vertical displacement, the lifter (68) being constructed in two parts and having two parts which are located beside each other and between which the pawls run.

2. Pawl conveyor according to Claim 1, **characterized in that** the collecting point (62) is formed by a depression in the transport rail (10).

3. Pawl conveyor according to Claim 2, **characterized in that** the bottom surface (64) of the depression (62) falls obliquely downwards in the transport direction.

4. Pawl conveyor according to one of the preceding claims, **characterized in that** the upper surface (70) of the lifter (68) is bevelled or chamfered in the transport direction.

5. Pawl conveyor according to one of the preceding claims, **characterized in that** at least one stop (72, 74) is provided before the separating device in order to hold clothes hangers back.

6. Pawl conveyor according to one of Claims 1 to 5, **characterized in that** at the collecting point there is provided a brush drive, a slipping conveyor belt or the like, by means of which the hangers are moved against the stop surface.

## Revendications

1. Transporteur à cliquets de retenue pour cintres pour vêtements de différentes épaisseurs, par exemple des cintres en fil métallique et cintres en matière plastique, qui sont déplacés à l'aide de cliquets de transport (30, 32, 58, 60), qui sont fixés à une chaîne, par un rail de transport (10), comportant un dispositif pour séparer les cintres pour un re-transport séparé sur le rail de transport, à l'aide des cliquets de transport, **caractérisé en ce que** le dispositif de séparation comprend un emplacement de collecte (62) sur le rail de transport (10) auquel se trouve une surface de butée (66), et **en ce que** devant la surface de butée (66) est prévu un organe de levage (68) pouvant coulisser vers le haut et vers le bas dont la surface supérieure (70) est déplaçable, lors de ce coulissement vertical, entre une position sur le fond de l'emplacement de collecte (62) et une position au-dessus de la surface de butée, l'organe de levage (68) étant réalisé en deux parties et comportant deux parties situées côte à côte à travers lesquelles passent les cliquets de retenue.

2. Transporteur à cliquets de retenue selon la revendication 1, **caractérisé en ce que** l'emplacement de collecte (62) est formé par un renfoncement dans le rail de transport (10).

3. Transporteur à cliquets de retenue selon la revendication 2, **caractérisé en ce que** la surface de fond (64) du renfoncement (62) descend obliquement dans le sens du transport.

4. Transporteur à cliquets de retenue selon l'une des revendications précédentes, **caractérisé en ce que** la surface supérieure (70) de l'organe de levage (68) est chanfreinée ou rainurée dans le sens du transport.

5. Transporteur à cliquets de retenue selon l'une des revendications précédentes, **caractérisé en ce que** devant le dispositif de séparation est prévue au moins une butée (72, 74) pour retenir des cintres.

6. Transporteur à cliquets de retenue selon l'une des revendications 1 à 5, **caractérisé en ce qu'**à l'emplacement de collecte il est prévu un entraînement à brosses, une bande de transport avec glissement ou similaire, par lesquels les cintres sont déplacés contre la surface de butée.
